# EUROPEAN PATENT APPLICATION

(11) **EP 4 663 503 A1**
(43) Date of publication of application: **17.12.2025**
(21) Application number: 25209357.0
(22) Date of filing: 17.10.2025
(51) Int. Cl.: B61B 13/00, B65G 1/04, B65G 35/00

(54) **HANDLING EQUIPMENT WITH THREE-STAGE GUIDING DEVICE**

(30) Priority: 15.09.2025 CN 202511317043
(71) Applicant: Yuanli Juhe (Chongqing) Robotics Technology Co., Ltd., Chongqing 401123 (CN)
(72) Inventor: Guan, Lidong, Chongqing, 401123 (CN)
(74) Representative: Loo, Chi Ching

(57) **Abstract**

The present disclosure discloses a handling equipment with a three-stage guiding device, where the first stage guiding assembly (200) limiting fits with the inner sides of the changing-over track (700) at the moment of reversing of the handling equipment, so as to adjust a posture of the handling equipment for a first time and reduce the offset angle of an equipment frame (100) relative to the sub rail (600). Then, the posture of the handling equipment embedded in the sub rail (600) is adjusted for a second time through the second stage guiding assembly (300), so as to further reduce the offset angle of the equipment frame relative to the sub rail (600). Finally, the posture of the handling equipment embedded in the sub rail (600) is adjusted for a third time through the third stage guiding assembly, further reducing the offset angle of the equipment frame (100) relative to the sub rail (600).

## Description

### FIELD

The present disclosure relates to the field of logistics and warehousing technology, and more particularly to a handling equipment with a three-stage guiding device.

### BACKGROUND

Handling equipment is important equipment for goods handling in logistics and warehousing systems. For example, the handling equipment can include a four-way shuttle vehicle, which can integrate functions such as four-way travel and on-site track change. When the handling equipment travels along a track, it is generally to add a limit structure between traveling wheels and the track for limiting fit to limit a relative position between the four-way shuttle vehicle and the track.

However, due to the relatively simple structure of the limit structure, the position control accuracy of the handling equipment during traveling is low. Moreover, during a process of the handling equipment switching from a main rail to a sub rail, due to the low control accuracy, the handling equipment may encounter faults such as inability to embed into the sub rail or collision with the sub rail.

### SUMMARY

In view of the problems that the limit structure of the handling equipment is simple, and the handling equipment cannot be embedded in the sub rail or collides with the sub rail due to the low control accuracy in the process of switching from the main rail to the sub rail, the present disclosure is proposed to provide a handling equipment with a three-stage guiding device that overcomes or at least partially solves the above problems.

The present disclosure provides a handling equipment with a three-stage guiding device, including:
an equipment frame, and a traveling mechanism and the three-stage guiding device both provided on the equipment frame;
where the traveling mechanism includes a first traveling wheel set and a second traveling wheel set, the first traveling wheel set is provided on a first side and a second side of the equipment frame, and the second traveling wheel set is provided on a third side and a fourth side of the equipment frame, the first side is opposite to the second side, and the third side is opposite to the fourth side;
the three-stage guiding device includes a first stage guiding assembly, a second stage guiding assembly, and a third stage guiding assembly, the first stage guiding assembly, the second stage guiding assembly, and the third stage guiding assembly each are symmetrically distributed on the first side and the second side, and are rotatable relative to the equipment frame;
a longest distance between two corresponding second guiding members in the second stage guiding assembly is less than a longest distance between two corresponding third guiding members in the third stage guiding assembly;
the first stage guiding assembly is configured to limiting fit with inner sides of a changing-over track at a moment of reversing of the handling equipment, so as to limit an offset angle of the equipment frame relative to a sub rail;
the second stage guiding assembly is configured to guide by generating rolling friction with a limit plate located on an outer side of the sub rail during the handling equipment enters the sub rail, so as to reduce the offset angle of the equipment frame relative to the sub rail;
the third stage guiding assembly is configured to guide by generating rolling friction with the limit plate during and after the handling equipment enters the sub rail, so as to reduce the offset angle of the equipment frame relative to the sub rail.

In an embodiment, the first side and the second side each are provided with at least two second guiding members and at least two third guiding members;
where along extension directions of the first side and the second side, the at least two third guiding members on a same side are located between the at least two second guiding members, so that the at least two second guiding members are embedded into the sub rail before the at least two third guiding members.

In an embodiment, the first stage guiding assembly includes four first guiding members, and any one of the four first guiding members is a wheel blocking edge of a first traveling wheel in a middle position of one side in the first traveling wheel set, where a distance between circle centers of two first traveling wheels with the wheel blocking edge and on a same side is greater than or equal to one-third of a length of the first side of the equipment frame.

In an embodiment, the first guiding member has an inclined guiding surface that fits with an inner side of the sub rail, and an inclined direction of the inclined guiding surface is such that a distance between circle centers of the first guiding member and the first traveling wheel gradually increases radially outward.

In an embodiment, along extension directions of the first side and the second side, at least two first guiding members on a same side are located between at least two third guiding members.

In an embodiment, the first stage guiding assembly includes at least four first guiding members, and each of the first side and the second side is provided with at least two first guiding members;
where the at least four first guiding members are guiding wheels and located at a bottom of the equipment frame, central axes of the at least four first guiding members are parallel to a vertical direction, and the at least four first guiding members are configured to guide by generating rolling friction with the inner sides of the changing-over track during the reversing of the handling equipment.

In an embodiment, a ratio of a distance between circle centers of two first guiding members located on a same side and at outermost ends to a length of the first side of the equipment frame is greater than or equal to a first ratio;
where the first ratio is determined based on a maximum deviation angle between a first guiding straight line formed by the two first guiding members and the sub rail.

In an embodiment, the at least two second guiding members are guiding wheels, central axes of the at least two second guiding members are parallel to a vertical direction, and the at least two second guiding members are configured to guide by generating rolling friction with the limit plate.

In an embodiment, in response to the second stage guiding assembly including four second guiding members, the four second guiding members are respectively provided at four side vertices of the equipment frame.

In an embodiment, the at least two third guiding members are guiding wheels, and central axes of the at least two third guiding members are parallel to a vertical direction.

In an embodiment, a ratio of a distance between circle centers of two third guiding members located on a same side and at outermost ends to a length of the first side of the equipment frame is greater than or equal to a second ratio;

where the second ratio is determined based on a maximum deviation angle between a third guiding straight line formed by the two third guiding members and the sub rail.

In an embodiment, the handling equipment includes one of a four-way shuttle vehicle, a six-way shuttle vehicle, or a track robot.

Compared with the prior art, in the present disclosure, firstly, the first stage guiding assembly limiting fits with the inner sides of the changing-over track at the moment of reversing of the handling equipment, so as to adjust a posture of the handling equipment for a first time. The offset angle of an equipment frame relative to the sub rail is reduced. Then, the posture of the handling equipment embedded in the sub rail is adjusted for a second time through the second stage guiding assembly, so as to further reduce the offset angle of the equipment frame relative to the sub rail. Finally, the posture of the handling equipment embedded in the sub rail is adjusted for a third time through the third stage guiding assembly, further reducing the offset angle of the equipment frame relative to the sub rail.

Thus, the three-stage guiding device, which combines the first stage guiding assembly, the second stage guiding assembly, and the third stage guiding assembly, gradually adjusts the offset angle of the handling equipment relative to the sub rail from large to small. Not only the smoothness of track switching of the handling equipment can be improved, but also the offset angle of the handling equipment reversing to the sub rail relative to the sub rail approaches zero. Therefore, when the handling equipment travels at high speed on the sub rail, high consistency between postures of the handling equipment and the sub rail can be ensured. The shift amplitude and swing amplitude of the handling equipment are greatly reduced, greatly improving the operational stability of the handling equipment.

The above description is merely a summary of the technical solution of the present disclosure. In order to more clearly know the technical means of the present disclosure to enable the implementation according to the contents of the description, and in order to make the above and other purposes, features and advantages of the present disclosure more apparent and understandable, the particular embodiments of the present disclosure are provided below.

### BRIEF DESCRIPTION OF THE DRAWINGS

By reading the detailed description of the embodiments below, various other advantages and benefits will become clear to those skilled in the art. The accompanying drawings are only for the purpose of illustrating the embodiments and are not considered to be limiting of the present disclosure. Moreover, the same components are represented by the same reference signs throughout the drawings.

In the drawings:
FIG. 1 is a schematic three-dimensional structural diagram of a handling equipment provided in an embodiment of the present disclosure.
FIG. 2 is a schematic front view structural diagram of a handling equipment provided in an embodiment of the present disclosure.
FIG. 3 is a schematic top view structural diagram of a handling equipment provided in an embodiment of the present disclosure.
FIG. 4 is a schematic side view structural diagram of a handling equipment provided in an embodiment of the present disclosure.
FIG. 5 is a schematic first structural diagram of limiting fit between a first guiding member and a changing-over track provided in an embodiment of the present disclosure.

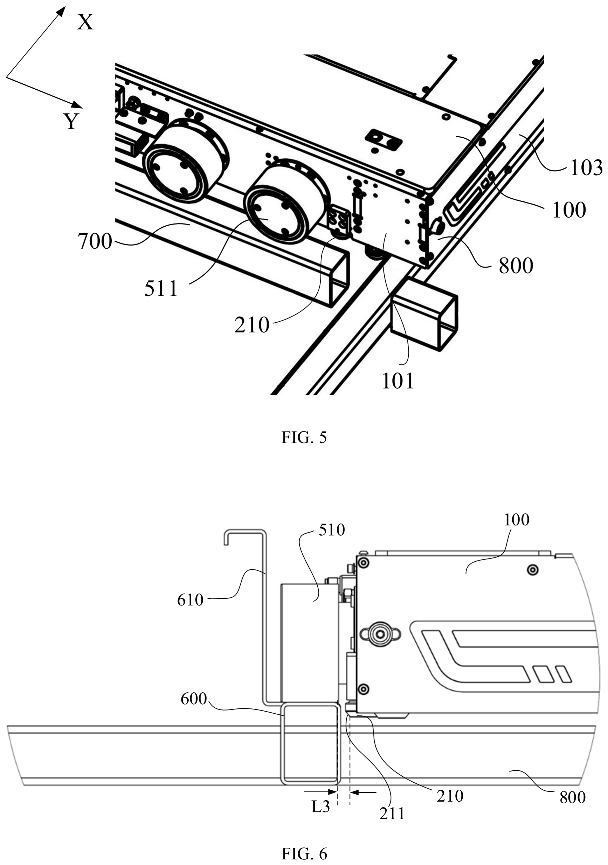

FIG. 5 is a schematic second structural diagram of limiting fit between a first guiding member and a changing-over track provided in an embodiment of the present disclosure.

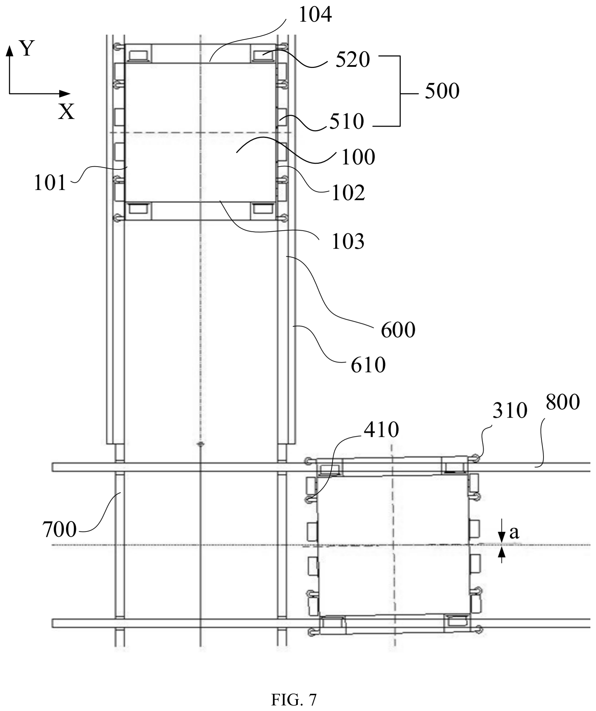

FIG. 7 is a schematic structural diagram of a handling equipment relative to a main rail provided in an embodiment of the present disclosure.

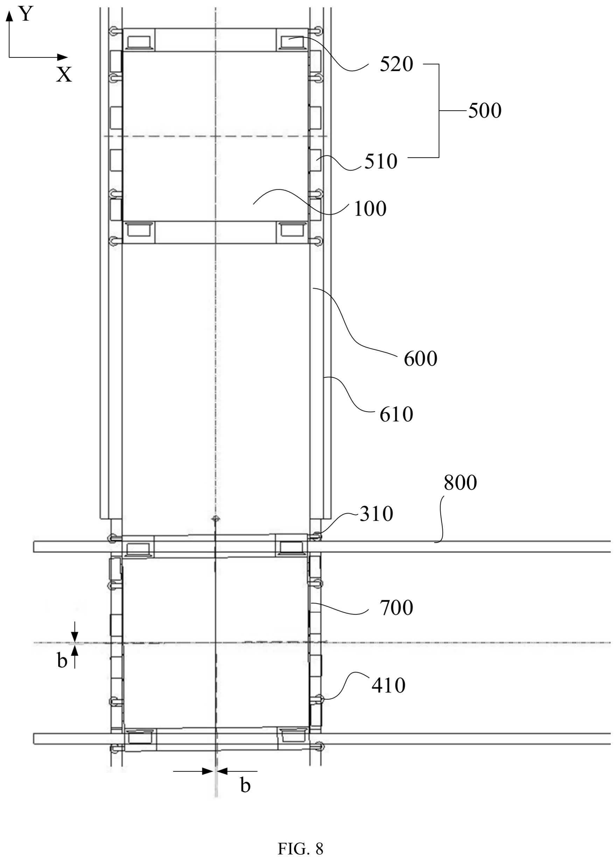

FIG. 8 is a schematic structural diagram of a handling equipment traveling to a changing-over track provided in an embodiment of the present disclosure.

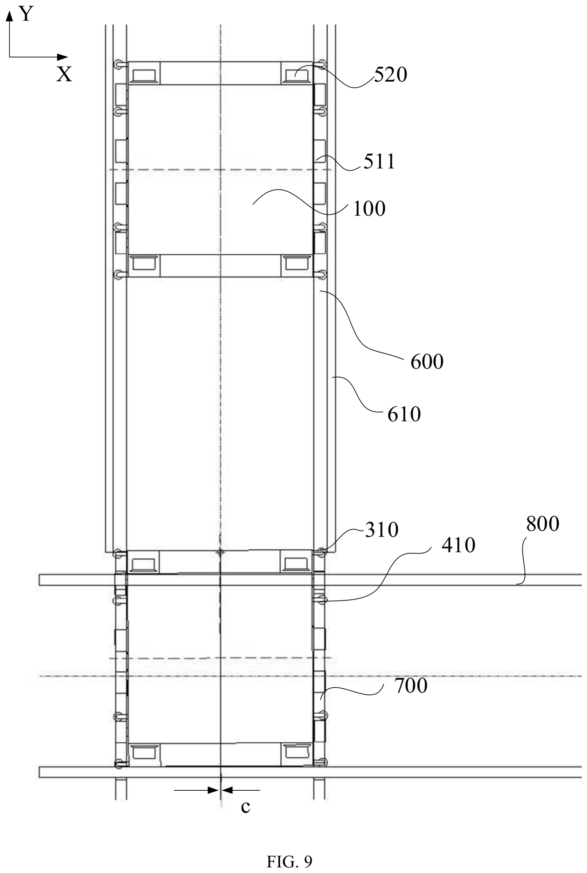

FIG. 9 is a schematic structural diagram of a second stage guiding assembly embedded in a sub rail provided in an embodiment of the present disclosure.

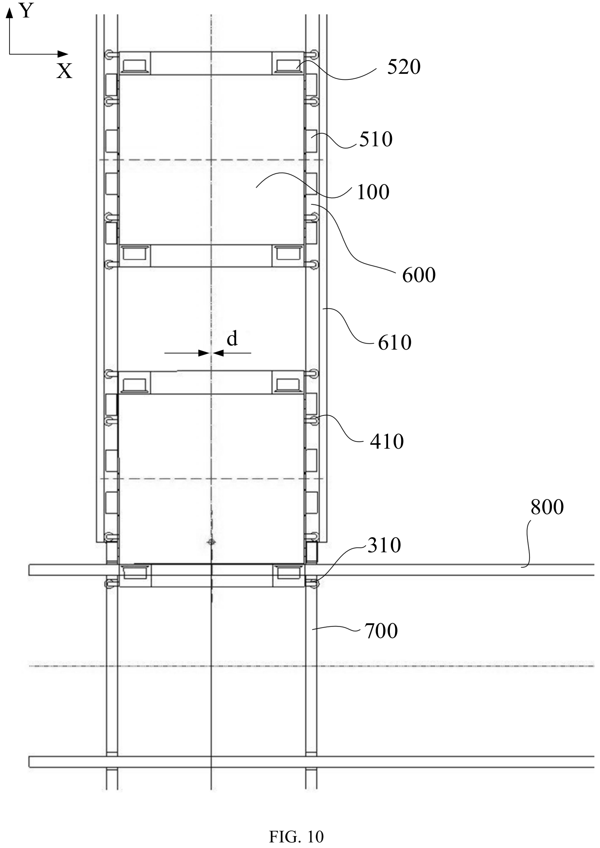

FIG. 10 is a schematic structural diagram of a handling equipment embedded in a sub rail provided in an embodiment of the present disclosure.

Reference signs: 100, equipment frame; 101, first side; 102, second side; 103, third side; 104, fourth side; 200, first stage guiding assembly; 210, first guiding member; 211, inclined guiding surface; 300, second stage guiding assembly; 310, second guiding member; 400, third stage guiding assembly; 410, third guiding member; 500, traveling mechanism; 510, first traveling wheel set; 511, first traveling wheel; 520, second traveling wheel set; 600, sub rail; 610, limit plate; 700, changing-over track; 800, main rail.

### DETAILED DESCRIPTION

Exemplary embodiments of the present disclosure will be described in more detail below with reference to the accompanying drawings. Although exemplary embodiments of the present disclosure are shown in the accompanying drawings, it should be understood that the present disclosure may be implemented in various forms and should not be limited by the embodiments described herein. On the contrary, these embodiments are provided to enable a more thorough understanding of the present disclosure and to fully convey the scope of the present disclosure to those skilled in the art.

Handling equipment is an important device for goods handling in logistics and warehousing systems. For example, the handling equipment can include a four-way shuttle vehicle, which can integrate functions such as four-way travel and on-site track change. When the handling equipment travels along a track, it is generally to add a limit structure between traveling wheels and the track for limiting fit to limit a relative position between the four-way shuttle vehicle and the track.

However, due to the relatively simple structure of the limit structure, the position control accuracy of the handling equipment during traveling is low. Moreover, during a process of the handling equipment switching from a main rail to a sub rail, due to the low control accuracy, the handling equipment may encounter faults such as inability to embed into the sub rail or collision with the sub rail.

Based on the above technical problems, the embodiments of the present disclosure are proposed. In the embodiments, firstly, a first stage guiding assembly limiting fits with inner sides of a changing-over track at a moment of reversing of the handling equipment, so as to adjust a posture of the handling equipment for a first time and reduce an offset angle of an equipment frame relative to the sub rail. Then, the posture of the handling equipment embedded in the sub rail is adjusted for a second time through a second stage guiding assembly, so as to further reduce the offset angle of the equipment frame relative to the sub rail. Finally, the posture of the handling equipment embedded in the sub rail is adjusted for a third time through a third stage guiding assembly, further reducing the offset angle of the equipment frame relative to the sub rail.

Thus, a three-stage guiding device, which combines the first stage guiding assembly, the second stage guiding assembly, and the third stage guiding assembly, gradually adjusts the offset angle of the handling equipment relative to the sub rail from large to small. Not only the smoothness of track switching of the handling equipment can be improved, but also the offset angle of the handling equipment reversing to the sub rail relative to the sub rail approaches zero. Therefore, when the handling equipment travels at high speed on the sub rail, high consistency between postures of the handling equipment and the sub rail can be ensured. The shift amplitude and swing amplitude of the handling equipment are greatly reduced, greatly improving the operational stability of the handling equipment.

In the embodiments of the present disclosure, the handling equipment may include but is not limited to types of equipment such as four-way shuttle vehicles, six-way shuttle vehicles, and track robots.

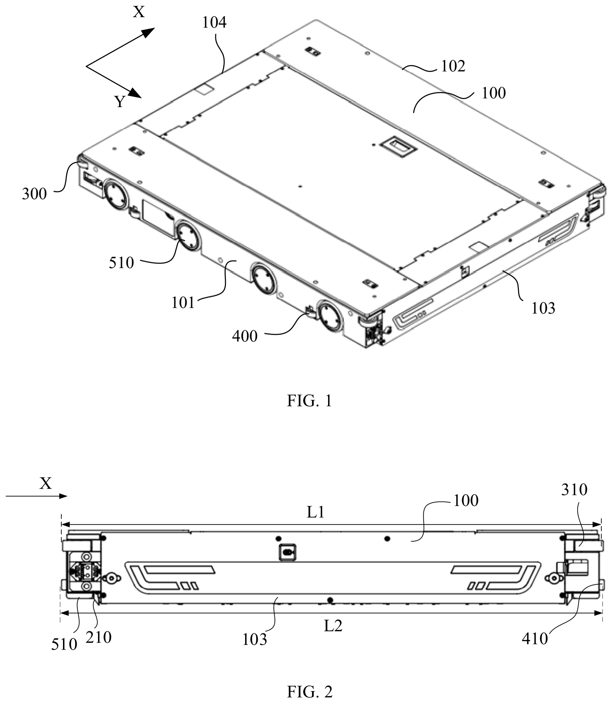

Referring to FIGs. 1-10, an embodiment of the present disclosure provides a handling equipment, which may include an equipment frame 100, and a traveling mechanism 500 and a guiding device both provided on the equipment frame 100.

Working traveling directions of the handling equipment on the track may include a first traveling direction and a second traveling direction. The first traveling direction and the second traveling direction are perpendicular to each other. Taking two-dimensional coordinates as a reference, the first traveling direction can be regarded as an X-axis of a two-dimensional coordinate system, and the second traveling direction can be regarded as a Y-axis of the two-dimensional coordinate system. Correspondingly, a track distributed along the first traveling direction can be referred to as a main rail 800, and a track distributed along the second traveling direction can be referred to as a sub rail 600. The track used to connect with the sub rail 600 in the main rail 800 can be referred to as a changing-over track 700. The changing-over track 700 refers to an intersection of the main rail 800 and the sub rail 600, which is located inside the main rail 800, with a direction perpendicular to the main rail 800 and parallel to the sub rail 600, and docked with the sub rail 600, achieving state switching of a four-way vehicle at a reversing position. The changing-over track 700 and the sub rail 600 are connected along the second traveling direction. Traveling wheels of the handling equipment respectively travel on a top of the main rail 800 and a top of the sub rail 600.

The traveling mechanism 500 may include a first traveling wheel set 510 and a second traveling wheel set 520. The first traveling wheel set 510 is arranged on the first side 101 and the second side 102 of the equipment frame 100, and the second traveling wheel set 520 is arranged on the third side 103 and the fourth side 104 of the equipment frame 100. The first side 101 is opposite to the second side 102, and the third side 103 is opposite to the fourth side 104. That is, the first traveling wheel set 510 drives the handling equipment to travel along the sub rail 600, and the second traveling wheel set 520 drives the handling equipment to travel along the main rail 800.

The guiding device may include a first stage guiding assembly 200, a second stage guiding assembly 300, and a third stage guiding assembly 400. The first stage guiding assembly 200, the second stage guiding assembly 300, and the third stage guiding assembly 400 each are symmetrically distributed on the first side 101 and the second side 102 about a central axis of the equipment frame, and are rotatable relative to the equipment frame 100. That is, the first stage guiding assembly 200, the second stage guiding assembly 300, and the third stage guiding assembly 400 can rotate.

A longest distance L1 between two corresponding second guiding members 310 in the second stage guiding assembly 300 is less than a longest distance L2 between two corresponding third guiding members 410 in the third stage guiding assembly 400. The longest distance can be understood as a distance between circle centers of two positions with the largest distance on the two second guiding members 310 or the two third guiding members 410 that are directly opposite each other. The setting where the longest distance L1 is less than the longest distance L2 enables an offset angle of the handling equipment relative to the sub rail 600 to gradually reduce under the combined action of a second guidance of the second stage guiding assembly 300 and a third guidance of the third stage guiding assembly 400. Thus, the position control accuracy of the handling equipment can be gradually improved.

The first stage guiding assembly 200 is used to limiting fit with inner sides of the changing-over track 700 at a moment of reversing of the handling equipment, so as to limit an offset angle of the equipment frame 100 relative to the sub rail 600. That is, during the process of the equipment frame 100 reversing to the sub rail 600 on the changing-over track 700, the equipment frame 100 will descend so that the first traveling wheel set 510 can rolling fit with the changing-over track 700. In this process, the first stage guiding assembly 200 limiting fits with the sides of the changing-over track 700 respectively, so that the offset angle of the equipment frame 100 relative to the sub rail 600 can be preliminarily adjusted. The offset angle may be an angle formed between a central axis of the equipment frame 100 distributed along the second traveling direction and a central axis of the sub rail 600 along the second traveling direction. Thus, the posture of the equipment frame 100 when entering the sub rail 600 can be adjusted, which improves the smoothness of the reversing of the handling equipment into the sub rail 600 and the control accuracy of traveling positions of the handling equipment.

The second stage guiding assembly 300 is used to guide by generating rolling friction with a limit plate 610 located on an outer side of the sub rail 600 during the handling equipment enters the sub rail 600, so as to reduce the offset angle of the equipment frame 100 relative to the sub rail 600. That is, after the posture of the equipment frame 100 is adjusted by the first stage guiding assembly 200, when the equipment frame 100 is embedded in the sub rail 600, the second stage guiding assembly 300 generates rolling friction with the limit plate 610 on the outer side of the sub rail 600 for guidance. The limit plate 610 is used to limit a traveling trajectory of the handling equipment on the sub rail 600, so as to avoid problems such as track deviation and sliding of the handling equipment on the sub rail 600. The second stage guiding assembly 300 and the limit plate 610 reduce friction through rolling fit and guide the equipment frame 100 entering the sub rail 600. That is, during the process when the equipment frame 100 is embedded into the sub rail 600, the posture of the equipment frame 100 can be further adjusted by the guiding effect of the second stage guiding assembly 300, thereby further reducing the offset angle of the equipment frame 100 relative to the sub rail 600. Therefore, the smoothness of the reversing of the handling equipment into the sub rail 600 can be improved, and the control accuracy of walking positions of the handling equipment along the second traveling direction can be improved.

The third stage guiding assembly 400 is used to guide by generating rolling friction with the limit plate 610 during and after the handling equipment enters the sub rail 600, so as to reduce the offset angle of the equipment frame 100 relative to the sub rail 600. On the basis of reducing the offset angle between the equipment frame 100 and the sub rail 600 through the second stage guiding assembly 300, the posture of the handling equipment can be adjusted again through the third stage guiding assembly 400, and the offset angle between the equipment frame 100 and the sub rail 600 can be further reduced.

Based on the above structure, when the handling equipment descends at the moment of reversing so that the first traveling wheel set 510 comes into contact with the changing-over track 700, the first stage guiding assembly 200 limiting fits with the changing-over track 700 to adjust the posture of the handling equipment for the first time, reducing the offset angle of the equipment frame 100 relative to the sub rail 600. Then, the posture of the handling equipment embedded in the sub rail 600 is adjusted for the second time through the second stage guiding assembly 300, so as to further reduce the offset angle of the equipment frame 100 relative to the sub rail 600. Finally, the posture of the handling equipment embedded in the sub rail 600 is adjusted for the third time through the third stage guiding assembly 400, so as to further reduce the offset angle of the equipment frame 100 relative to the sub rail 600.

Thus, the three-stage guiding device, which combines the first stage guiding assembly 200, the second stage guiding assembly 300, and the third stage guiding assembly 400, gradually adjusts the offset angle of the handling equipment relative to the sub rail 600 from large to small. Not only the smoothness of track switching of the handling equipment can be improved, but also the offset angle of the handling equipment reversing to the sub rail 600 relative to the sub rail 600 approaches zero. Therefore, when the handling equipment travels at high speed along the second traveling direction on the sub rail 600, high consistency between postures of the handling equipment and the sub rail 600 can be ensured. The shift amplitude and swing amplitude of the handling equipment are greatly reduced, greatly improving the operational stability of the handling equipment.

In one or more embodiments, the first side 101 and the second side 102 each are provided with at least two second guiding members 310 and at least two third guiding members 410. Along extension directions of the first side 101 and the second side 102, the at least two third guiding members 410 on a same side are located between the at least two second guiding members 310, so that the at least two second guiding members 310 are embedded into the sub rail 600 before the at least two third guiding members 410.

In the embodiments of the present disclosure, each of the first side 101 and the second side 102 is provided with at least two second guiding members 310 and at least two third guiding members 410. According to the extension direction of the first side 101, the at least two third guiding members 410 distributed on the first side 101 are positioned between the at least two second guiding members 310 distributed on the first side 101. According to the extension direction of the second side 102, the at least two third guiding members 410 distributed on the second side 102 are positioned between the at least two second guiding members 310 distributed on the second side 102. In other words, the second guiding members 310 are closer to the third side 103 and the fourth side 104 compared to the third guiding members 410. Therefore, during the reversing process of the handling equipment, the second guiding members 310 can take priority over the third guiding members 410 to generate rolling friction with the limit plate 610 outside the sub rail 600, and form guidance, thereby achieving posture adjustment of the handling equipment for the second time during the reversing process. Finally, through the rolling friction between the third guiding members 410 and the limit plate 600 and forming guidance, the posture adjustment of the handling equipment for the third time during the reversing process is achieved.

In one or more embodiments, as shown in FIGs. 1, 2, and 4, the first stage guiding assembly 200 may include four first guiding members 210. Any one of the first guiding members 210 is a wheel blocking edge of a first traveling wheel 511 in a middle position of one side in the first traveling wheel set 510. A distance between circle centers of two first traveling wheels 511 with the wheel blocking edge and on a same side is greater than or equal to one-third of a length of the first side 101 of the equipment frame 100.

In the embodiments of the present disclosure, the four first guiding members 210 of the first stage guiding assembly 200 can be evenly distributed on the first side 101 and the second side 102. That is, each side is provided with two first guiding members 210, and symmetrically distributed about the central axis of the equipment frame 100 along the second traveling direction. The first guiding members 210 are wheel blocking edges of two first traveling wheels 511 located in the middle position on the same side in the first traveling wheel set 510. That is, two of the first guiding members 210 can be wheel blocking edges of the two first traveling wheels 511 located in the middle position of the first side 101. The other two first guiding members 210 can be wheel blocking edges of the two first traveling wheels 511 located in the middle position of the second side 102. In other words, the first guiding member 210 can be located on an inner side of the first traveling wheel 511 and be of an integrated structure or fixedly connected with the first traveling wheel 511. The first guiding members 210 forms a limiting fit with sides of the sub rail 600. On the one hand, in order to reduce the offset angle of the equipment frame 100 relative to the sub rail 600, and on the other hand, the first guiding member 210 is directly integrated on the first traveling wheel 511, which can save the assembly space of the first guiding member 210 on the first side 101 and the second side 102, improve the positioning accuracy of the first guiding member 210, and reduce the structural complexity of the handling equipment.

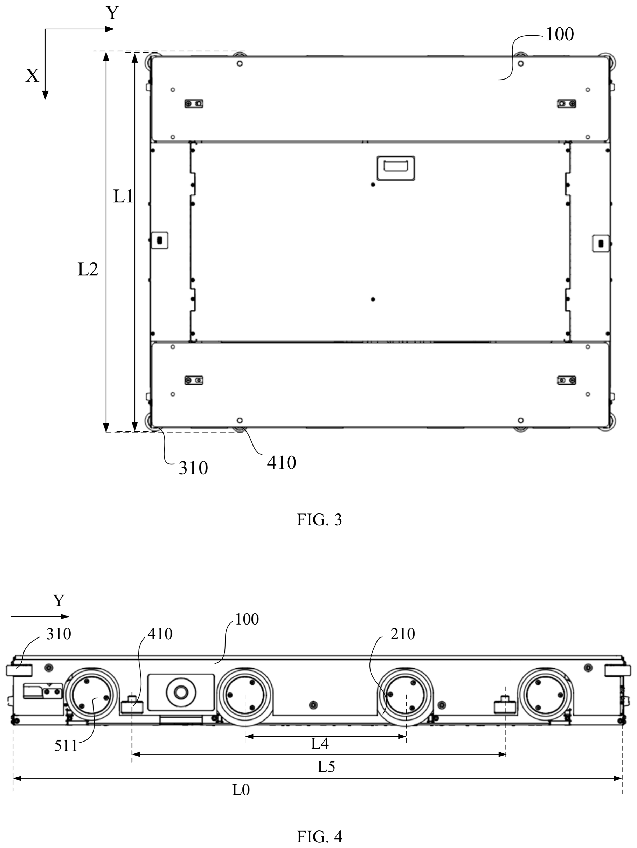

Referring to FIG. 4, the center distance L4 between the circle centers of two first traveling wheels 510 with the wheel blocking edge and located on the same side is greater than or equal to one-third of the length L0 of the first side 101 of the equipment frame 100. In the case where the center distance L4 exceeds one-third of the length L0 of the first side 101, it can be ensured that based on the limiting fit between the two first guiding members 210 and the changing-over track 700, a slope of a first guiding straight line formed by the two first guiding members 210 located on the same side can be changed within a certain range. That is, it is ensured that the offset angle of the handling equipment relative to the sub rail 600 can be initially reduced under the posture adjustment of the handling equipment by the first guiding members 210.

Referring to FIG. 7, when the handling equipment travels along the main rail 800, an angle a is formed between a central axis of the equipment frame 100 along the first traveling direction and a central axis of the main rail 800. Correspondingly, the angle a is formed between the central axis of the equipment frame 100 along the second traveling direction and the central axis of the sub rail 600. Under the limiting fit between the first guiding members 210 and the changing-over track 700, the angle a is reduced to an angle b, thereby reducing the offset angle of the equipment frame 100 relative to the sub rail 600 and improving the smoothness of the handling equipment being embedded in the sub rail 600. It is avoided that the offset angle of the handling equipment relative to the main rail 800 is too large, which may cause the handling equipment to collide with the sub rail 600 when reversing to the sub rail 600.

In one or more embodiments, as shown in FIG. 6, the first guiding member 210 has an inclined guiding surface 211 that fits with an inner side of the sub rail 600. An inclined direction of the inclined guiding surface 211 is such that a distance between circle centers of the first guiding member 210 and the first traveling wheel 511 gradually increases radially outward.

In the embodiments of the present disclosure, during the process when the first traveling wheel 511 of the handling equipment begins to descend to be in rolling fit with the changing-over track 700, the inclined guiding surface 211 forms a limit fit with the changing-over track 700 in advance. During the descent process, the inclined direction of the inclined guiding surface 211 can gradually reduce the distance from the first traveling wheel 511, so that a gap between the first guiding member 210 and the inner side of the changing-over track 700 can be reduced. The posture of the equipment frame 100 is adjusted, so as to reduce the offset angle of the equipment frame 100 relative to the sub rail 600 before the handling equipment is embedded in the sub rail 600.

In one or more embodiments, as shown in FIG. 4, along extension directions of the first side 101 and the second side 102, at least two first guiding members 210 on a same side are located between at least two third guiding members 410.

In the embodiments of the present disclosure, according to the extension direction of the first side 101, the at least two first guiding members 210 distributed on the first side 101 are positioned between the at least two third guiding members 410. According to the extension direction of the second side 102, the at least two the first guiding members 210 distributed on the second side 102 are positioned between the at least two the third guiding members 410. In other words, the third guiding members 410 are closer to the third side 103 and the fourth side 104 compared to the first guiding members 210.

In one or more embodiments, the first stage guiding assembly 200 may include at least four first guiding members 210, and each of the first side 101 and the second side 102 is provided with at least two first guiding members 210. Referring to FIG. 5, the first guiding member 210 is a guiding wheel and located at a bottom of the equipment frame 100, and a central axis of the first guiding member 210 is parallel to a vertical direction. The first guiding member is used to guide by generating rolling friction with the inner side of the changing-over track 700 during the reversing of the handling equipment.

In the embodiments of the present disclosure, at least two first guiding members 210 are arranged on each of two sides (the first side 101 and the second side 102) of the equipment frame 100 distributed along the first traveling direction, and the first guiding members 210 are symmetrically arranged about the central axis of the equipment frame 100 distributed along the second traveling direction. The first guiding members 210 are guiding wheels, and can be used to generate rolling friction with the sides of the changing-over track 700, thereby providing guidance. The rotation axes of the first guiding members 210 are set parallel to the vertical direction, so that when the handling equipment rolling fits with the changing-over track 700 and travels towards the sub rail 600, the posture of the equipment frame 100 can be adjusted by the rolling of the first guiding members 210 along the inner sides of the changing-over track 700.

Referring to FIGs. 7 and 8, when the handling equipment travels along the main rail 800, an angle a is formed between the central axis of the equipment frame 100 along the first traveling direction and the central axis of the main rail 800. Correspondingly, the angle a is formed between the central axis of the equipment frame 100 along the second traveling direction and the central axis of the sub rail 600. Under the rolling friction is generated between the first guiding members 210 and the changing-over track 700 for guidance, the angle a is reduced to an angle b, thereby reducing the offset angle of the equipment frame 100 relative to the sub rail 600 and improving the smoothness of the handling equipment being embedded in the sub rail 600. It is avoided that the offset angle of the handling equipment relative to the main rail 800 is too large, which may cause the handling equipment to collide with the sub rail 600 when reversing to the sub rail 600.

In one or more embodiments, referring to FIG. 4, a ratio of a distance L4 between circle centers of two first guiding members 210 located on a same side and at outermost ends to the length L0 of the first side 101 of the equipment frame 100 is greater than or equal to a first ratio. The first ratio is determined based on a maximum deviation angle between the first guiding straight line formed by the two first guiding members 210 and the sub rail 600.

In the embodiments of the present disclosure, in order for the equipment frame 100 to enter the sub rail 600 more smoothly, it is necessary to reduce the offset angle of the equipment frame 100 relative to the sub rail 600, that is, the central axis of the equipment frame 100 distributed along the second traveling direction needs to be closer to parallel to the sub rail 600. The two first guiding members 210 located on the same side and at the outermost ends can be understood as two first guiding members 210 closest to side vertices of the equipment frame 100 at two ends (also referred to as two first guiding members 210 on the same side that are respectively closest to the third side 103 and the fourth side 104).

In the case where two first guiding members 210 determine a first guide straight line, the slope change of the first guide straight line is determined by a vertical offset length of the two first guiding members 210 along the first traveling direction. It can be known from a tangent function that the deviation angle is inversely proportional to the distance L4 between the circle centers of the two first guiding members 210 located at the outermost ends. That is, the smaller the deviation angle, the larger the distance between the circle centers of the two first guiding members 210 located at the outermost ends. The larger the deviation angle, the smaller the distance between the circle centers of the two first guiding members 210 located at the two ends.

Thus, the first ratio can be determined based on the maximum allowable deviation angle between the first guiding straight line and the sub rail 600. And based on the first ratio, the distance L4 between the circle centers of the two first guiding members 210 distributed at the outermost ends on the equipment frame 100 is calculated. For example, the first ratio can be 1/3, in other words, the distance L4 between the circle centers of the two first guiding members 210 located on the same side and at the outermost ends exceeds one-third of the length L0 of the first side 101 of the equipment frame 100.

In one or more embodiments, as shown in FIGs. 1, 3, and 4, the second guiding members 310 are guiding wheels. Central axes of the second guiding members 310 are parallel to the vertical direction, and the second guiding members 310 are used to guide by generating rolling friction with the limit plate.

In the embodiments of the present disclosure, the second guiding members 310 may adopt guiding wheel structures such as rubber-coated wheels or metal wheels, and the central axes of the second guiding members 310 are parallel to the vertical direction. In the case where the central axes are parallel to the vertical direction, the second guiding members 310 can be driven by the first traveling wheel set 510 to generate rolling friction with the limit plate 610 and guide the handling equipment.

Referring to FIG. 9, when the handling equipment is embedded in the sub rail 600 from the changing-over track 700 (also referred to as the process of entering the sub rail 600), the second guiding members 310 can follow the equipment frame 100 to move along the second traveling direction. If the second guiding members 310 collide with the limit plate 610, it is determined that the offset angle of the handling equipment relative to the sub rail 600 is large. At this time, while the handling equipment is traveling along the second traveling direction, the second guiding members 310 rolling fit with the inner side of the limit plate 610. And the second guiding members 310 roll along the second traveling direction, and the posture of the equipment frame 100 is adjusted through the at least two second guiding members 310 provided on each of the first side 101 and the second side 102, so as to further reduce the offset angle of the equipment frame 100 relative to the sub rail 600.

For example, under the guiding effect of the rolling friction generated by the second guiding members 310, the angle b formed between the central axis of the equipment frame 100 along the second traveling direction and the central axis of the sub rail 600 is reduced to an angle c. Therefore, the smoothness of the handling equipment being embedded in the sub rail 600 can be improved. Faults such as collisions between the handling equipment and the sub rail 600 when the handling equipment reverses to the sub rail 600 can be avoided.

In one or more embodiments, as shown in FIG. 1, when the number of second guiding members 310 is set to be four, the four second guiding members 310 are respectively provided at four side vertices of the equipment frame 100.

In the embodiments of the present disclosure, in the case where the second stage guiding assembly 300 is only provided with four second guiding members 310, the second guiding members 310 are arranged at the side vertices of the equipment frame 100. At the moment when the equipment frame 100 is embedded into the sub rail 600, if the offset angle of the handling equipment relative to the sub rail 600 is large, two second guiding members 310 located at the side vertices can instantaneously generate rolling friction with the limit plate 610 for guidance. Thus, the posture of the equipment frame 100 entering the sub rail 600 can be adjusted in advance through the second guiding members 310 arranged at the side vertices. After the offset angle of the equipment frame 100 relative to the sub rail 600 is reduced, the entire handling equipment can smoothly enter the sub rail 600 in a new posture. Therefore, the smoothness of the reversing of the handling equipment can be further improved, and the shaking amplitude of the handling equipment in the sub rail 600 can be reduced.

In one or more embodiments, as shown in FIGs. 1, 3, and 4, the third guiding members 410 are guiding wheels, and central axes of the third guiding members 410 are parallel to the vertical direction.

In the embodiments of the present disclosure, the third guiding member 410 may adopt guiding wheel structures such as rubber-coated wheels or metal wheels. The central axes of the third guiding members 410 are parallel to the vertical direction. In the case where the central axes are parallel to the vertical direction, the third guiding members 410 can be driven by the first traveling wheel set 510 to generate rolling friction with the limit plate 610 and guide the handling equipment.

Referring to FIG. 10, when a part of the handling equipment is embedded in the sub rail 600 (which can also be understood as the process of the handling equipment entering the sub rail 600), or after the handling equipment enters the sub rail 600, the third guiding members 410 can follow the equipment frame 100 to move along the second traveling direction. If the third guiding members 410 collide with the limit plate 610, it is determined that the offset angle of the handling equipment relative to the sub rail 600 is large. At this time, the third guiding members 410 rolling fit with the inner side of the limit plate 610 and roll along the second traveling direction. The posture of the equipment frame 100 is adjusted through the at least two third guiding members 410 provided on each of the two sides. Thus, the offset angle of the equipment frame 100 relative to the sub rail 600 can be further reduced.

For example, under the guidance effect of the rolling friction generated by the third guiding members 410, the angle c formed between the central axis of the equipment frame 100 along the second traveling direction and the central axis of the sub rail 600 is reduced to an angle d, and the angle d approaches zero. Therefore, the smoothness of the handling equipment being embedded in the sub rail 600 can be improved, and the swing amplitude of the handling equipment traveling in the sub rail 600 can be reduced. Not only the high consistency of postures between the handling equipment and the sub rail 600 can be improved, but also the operational stability of the handling equipment can be enhanced.

In one or more embodiments, referring to FIG. 4, a ratio of a distance L5 between circle centers of two third guiding members 410 located on a same side and at outermost ends to the length L0 of the first side 101 of the equipment frame 100 is greater than or equal to a second ratio. The second ratio is determined based on a maximum deviation angle between a third guiding straight line formed by the two third guiding members 410 and the sub rail 600.

In the embodiments of the present disclosure, in order to reduce the shift amplitude and swing amplitude of the equipment frame 100 when traveling in the sub rail 600 at high speed, it is necessary to further reduce the offset angle of the equipment frame 100 relative to the sub rail 600, that is, the central axis of the equipment frame 100 distributed along the second traveling direction needs to approach parallel to the sub rail 600. In the case where two third guiding members 410 determine a third guiding straight line, the slope change of the third guiding straight line is determined by a vertical offset length of the two third guiding members 410 along the first traveling direction. It can be known from the tangent function that the deviation angle is inversely proportional to the distance L5 between the circle centers of the two third guiding members 410 located at the outermost ends. That is, the smaller the deviation angle, the larger the distance L5 between the circle centers of the two third guiding members 410 located at the outermost ends. The larger the deviation angle, the smaller the distance L5 between the circle centers of the two third guiding members 410 located at the outermost ends.

Thus, the second ratio can be determined based on the maximum allowable deviation angle between the third guiding straight line and the sub rail 600. And based on the second ratio, the distance L5 between the circle centers of the two third guiding members 410 distributed at the outermost ends on the equipment frame 100 is calculated. For example, the second ratio can be 2/3. In other words, the distance L5 between the circle centers of the two third guiding members 410 located on the same side and at the outermost ends exceeds two-thirds of the length L0 of the first side 101 of the equipment frame 100. The second ratio is greater than the first ratio, and the maximum deviation angle associated with the second ratio is smaller than the maximum deviation angle associated with the first ratio.

In the above embodiments of the present disclosure, the traveling wheels and/or guiding wheels can adopt rubber-coated wheels. Through the rubber-coated wheels, the friction between the wheels and the tracks, the limit plate 610 can be increased, thereby improving the acceleration efficiency, deceleration efficiency and guiding efficiency of the handling equipment.

To sum up, the embodiments of the present disclosure disclose the handling equipment with the three-stage guiding device, when the handling equipment descends at the moment of reversing so that the first traveling wheel set 510 comes into contact with the changing-over track 700, the first stage guiding assembly 200 limiting fits with the changing-over track 700 to adjust the posture of the handling equipment for the first time, reducing the offset angle of the equipment frame 100 relative to the sub rail 600. Then, the posture of the handling equipment embedded in the sub rail 600 is adjusted for the second time through the second stage guiding assembly 300, so as to further reduce the offset angle of the equipment frame 100 relative to the sub rail 600. Finally, the posture of the handling equipment embedded in the sub rail 600 is adjusted for the third time through the third stage guiding assembly 400, so as to further reduce the offset angle of the equipment frame 100 relative to the sub rail 600.

The various embodiments in this specification are described in a progressive manner, and each embodiment focuses on differences from other embodiments. The same and similar parts between the various embodiments can be referred to each other.

It is easy for those skilled in the art to think that any combination of the above embodiments is feasible, so any combination between the above embodiments is the implementation scheme of the present disclosure. However, due to space limitations, this specification will not elaborate on them one by one here.

Many details are discussed in the specification provided herein. However, it should be understood that the embodiments of the present disclosure can be implemented without these specific details. In some examples, the well-known methods, structures and technologies are not shown in detail so as to avoid an unclear understanding of the description.

Similarly, it should be understood that in order to streamline the present disclosure and assist in understanding one or more of the various aspects of the present disclosure, in the above description of the exemplary embodiments of the present disclosure, the various features of the present disclosure are sometimes grouped together into a single embodiment, figure, or description thereof.

In addition, those skilled in the art can understand that although some embodiments described herein include certain features included in other embodiments rather than other features, the combination of features of different embodiments is meant to be within the scope of the present disclosure and form different embodiments. For example, in the claims, any one of the embodiments claimed for protection can be used in any combination.

## Claims

1. A handling equipment with a three-stage guiding device, comprising an equipment frame (100), and a traveling mechanism (500) and the three-stage guiding device both provided on the equipment frame (100);
wherein the traveling mechanism (500) comprises a first traveling wheel set (510) and a second traveling wheel set (520), the first traveling wheel set (510) is provided on a first side (101) and a second side (102) of the equipment frame (100), and the second traveling wheel set (520) is provided on a third side (103) and a fourth side (104) of the equipment frame (100), the first side (101) is opposite to the second side (102), and the third side (103) is opposite to the fourth side (104);
the three-stage guiding device comprises a first stage guiding assembly (200), a second stage guiding assembly (300), and a third stage guiding assembly (400), the first stage guiding assembly (200), the second stage guiding assembly (300), and the third stage guiding assembly (400) each are symmetrically distributed on the first side (101) and the second side (102), and are rotatable relative to the equipment frame (100);
a longest distance between two corresponding second guiding members (310) in the second stage guiding assembly (300) is less than a longest distance between two corresponding third guiding members (410) in the third stage guiding assembly (400);
the first stage guiding assembly (200) is configured to limiting fit with inner sides of a changing-over track (700) at a moment of reversing of the handling equipment, so as to limit an offset angle of the equipment frame (100) relative to a sub rail (600);
the second stage guiding assembly (300) is configured to guide by generating rolling friction with a limit plate (610) located on an outer side of the sub rail (600) during the handling equipment enters the sub rail (600), so as to reduce the offset angle of the equipment frame (100) relative to the sub rail (600);
the third stage guiding assembly (400) is configured to guide by generating rolling friction with the limit plate (610) during and after the handling equipment enters the sub rail (600), so as to reduce the offset angle of the equipment frame (100) relative to the sub rail (600).

2. The handling equipment according to claim 1, wherein the first side (101) and the second side (102) each are provided with at least two second guiding members (310) and at least two third guiding members (410);
wherein along extension directions of the first side (101) and the second side (102), the at least two third guiding members (410) on a same side are located between the at least two second guiding members (310), so that the at least two second guiding members (310) are embedded into the sub rail (600) before the at least two third guiding members (410).

3. The handling equipment according to claim 1 or 2, wherein the first stage guiding assembly (200) comprises four first guiding members (210), and any one of the four first guiding members (210) is a wheel blocking edge of a first traveling wheel (511) in a middle position of one side in the first traveling wheel set (510), wherein a distance between circle centers of two first traveling wheels (511) with the wheel blocking edge and on a same side is greater than or equal to one-third of a length of the first side (101) of the equipment frame (100).

4. The handling equipment according to claim 3, wherein the first guiding member (210) has an inclined guiding surface (211) that fits with an inner side of the sub rail (600), and an inclined direction of the inclined guiding surface (211) is such that a distance between circle centers of the first guiding member (210) and the first traveling wheel (511) gradually increases radially outward.

5. The handling equipment according to claim 3, wherein along extension directions of the first side (101) and the second side (102), at least two first guiding members (210) on a same side are located between at least two third guiding members (410).

6. The handling equipment according to claim 1, wherein the first stage guiding assembly (200) comprises at least four first guiding members (210), and each of the first side (101) and the second side (102) is provided with at least two first guiding members (210);
wherein the at least four first guiding members (210) are guiding wheels and located at a bottom of the equipment frame (100), central axes of the at least four first guiding members (210) are parallel to a vertical direction, and the at least four first guiding members (210) are configured to guide by generating rolling friction with the inner sides of the changing-over track (700) during the reversing of the handling equipment.

7. The handling equipment according to claim 6, wherein a ratio of a distance between circle centers of two first guiding members (210) located on a same side and at outermost ends to a length of the first side (101) of the equipment frame (100) is greater than or equal to a first ratio;
wherein the first ratio is determined based on a maximum deviation angle between a first guiding straight line formed by the two first guiding members (210) and the sub rail (600).

8. The handling equipment according to claim 2, wherein the at least two second guiding members (310) are guiding wheels, central axes of the at least two second guiding members (310) are parallel to a vertical direction, and the at least two second guiding members (310) are configured to guide by generating rolling friction with the limit plate (610).

9. The handling equipment according to claim 8, wherein in response to the second stage guiding assembly (300) comprising four second guiding members (310), the four second guiding members (310) are respectively provided at four side vertices of the equipment frame (100).

10. The handling equipment according to claim 2, wherein the at least two third guiding members (410) are guiding wheels, and central axes of the at least two third guiding members (410) are parallel to a vertical direction.

11. The handling equipment according to claim 10, wherein a ratio of a distance between circle centers of two third guiding members (410) located on a same side and at outermost ends to a length of the first side (101) of the equipment frame (100) is greater than or equal to a second ratio;
wherein the second ratio is determined based on a maximum deviation angle between a third guiding straight line formed by the two third guiding members (410) and the sub rail (600).

12. The handling equipment according to claim 1, wherein the handling equipment comprises one of the following: a four-way shuttle vehicle, a six-way shuttle vehicle, or a track robot.
